# EUROPÄISCHE PATENTSCHRIFT

(11) **EP 1 291 832 B1**
(45) Veröffentlichungstag und Bekanntmachung des Hinweises auf die Patenterteilung: **26.04.2006**
(21) Anmeldenummer: 01121223.0
(22) Anmeldetag: 05.09.2001
(51) Int. Cl.: G08C 17/02, A61H 33/00, H02J 7/02

(54) **Fernbedienungseinrichtung für sanitäre Anlagen, insbesondere für Whirlwannen**
Remote control device for sanitary installations, especially for whirlpools
Télécommande pour installations sanitaires, notamment pour bains à remous

(43) Veröffentlichungstag der Anmeldung: 12.03.2003
(73) Patentinhaber: Franz Kaldewei GmbH & Co.KG, 59229 Ahlen (DE)
(72) Erfinder: Bökamp, Winfried, Dipl.-Ing., 59302 Oelde (DE)
(74) Vertreter: Albrecht, Rainer Harald

(56) Entgegenhaltungen:
- EP-A- 0 504 670
- WO-A-01/06978
- DE-U- 29 603 660

## Beschreibung

Die Erfindung betrifft eine Fernbedienungseinrichtung für sanitäre Anlagen, insbesondere für Whirlwannen, mit einem Handsender, einer an eine Steuereinrichtung einer sanitären Anlage anschließbaren Sende/Empfangseinrichtung und einer Basisstation mit einer Aufnahmemulde für den Handsender,
wobei der Handsender ein wasserdichtes Gehäuse mit einem Bedienfeld und einer Flüssigkristallanzeige aufweist und eine wieder aufladbare Spannungsquelle, eine Akkuladeeinrichtung mit einer Induktionsspule für eine kontaktfreie induktive Energieaufnahme sowie ein Elektronikbauteil mit Mikroprozessor, Sender und Empfänger für einen bidirektionalen Datenaustausch enthält und wobei die mit einer Sicherheitskleinspannnung betriebene Basisstation einen Spulenkörper für eine kontaktfreie, induktive Ladestromübertragung auf die Akkuladeeinrichtung des in die Aufnahmemulde ablegbaren Handsenders aufweist, und wobei der Sender und Empfänger des Handsenders und die an eine Steuereinrichtung anschließbare Sende/Empfangseinrichtung im Funkwellenbereich arbeitende Funkmodule für die bidirektionale Datenübertragung umfassen.

Whirlwannen sind Sanitärwannen, die im Wand- und/oder Bodenbereich Düsen für die Einleitung von Luft und/oder Wasser aufweisen. An die Düsen sind Förder- oder Umwälzeinrichtungen angeschlossen, die durch eine der sanitären Anlage zugeordnete Steuereinrichtung betätigbar sind. Durch die mit der Steuereinrichtung kommunizierende Fernbedienungseinrichtung hat der Benutzer z. B. die Möglichkeit, Dauer sowie Strahlintensität zu verändern und/oder vorgegebene Intervallprogramme für die Wasser- und/oder Lufteinstrahlung anzuwählen. Hinzu kommen weitere Funktionen, z. B. das Aufheizen der Gebläseluft, die Schaltung einer Beleuchtung, die Schaltung von Reinigungsprogrammen und dergleichen.

Aus der DE-U 296 03 660 ist eine Fernbedienungseinrichtung der eingangs beschriebenen Art bekannt. Die Basisstation dieser bekannten Einrichtung dient lediglich der Aufladung des Handsenders und ist am Wannenrand einer Sanitärwanne befestigt. Die der Steuereinrichtung zugeordnete stationäre Sende/Empfangseinrichtung ist mit Abstand von der Basisstation, z. B. am Fußende der Sanitärwanne, angeordnet. Der bidirektionale Datenaustausch zwischen Handsender und stationärer Sende/ Empfangseinrichtung erfolgt mittels elektromagnetischer Wellen, vorzugsweise im Infrarotbereich. Die Basisstation muss auf dem Wannenrand so ausgerichtet werden, dass ein Datenaustausch zwischen Sender und Empfänger sichergestellt ist, wenn das Handgerät in der Auflagemulde der Basisstation abgelegt ist. Ebenso muss der Benutzer darauf achten, dass der Handsender bei einer Betätigung außerhalb der Basisstation in geeigneter Weise zur stationären Sende/ Empfangseinrichtung ausgerichtet wird. Der Bedienungskomfort und die Sicherheit der Datenübertragung sind verbesserungsbedürftig. Die separate Anordnung von Basisstation oder stationärer Sende/Empfangseinrichtung mit zugeordneten Einrichtungen für die Stromversorgung und für die Signalübertragung ist ferner mit einem erheblichen Installationsaufwand verbunden.

Ferner kennt man eine Fernbedienungseinrichtung für die Steuerung der Wasser- und/oder Luft-Zufuhrdüsen einer Badewanne, welche ein Hand-Fernbedienungsgerät mit Befehlstasten sowie zumindest eine Sendediode aufweist. Dieser Sendediode ist eine mit den zu steuernden Funktionselementen in Verbindung stehende stationäre Empfangsdiode zugeordnet. Bei der insoweit bekannten Fernbedienungseinrichtung soll sich eine Vereinfachung ohne Beeinträchtigung der Steuerungsmöglichkeiten ergeben, indem für das Hand-Fernbedienungsgerät eine vom Benutzer der Badewanne ergonomisch günstig von Hand erreichbare stationäre Geräteablage mit einer ihr zugeordneten stationären Empfangsdiode vorgesehen ist, die auf die ihr zugeordnete Sendediode des nur in vorbestimmter Position ablegbaren Hand-Fernbedienungsgerätes ausgerichtet ist (vgl. EP 0 504 670 A1).

Schließlich ist aus der WO 01/06978 eine Fernbedienung für ein Luftsprudelmassagegerät mit einem Handsteuergerät zum Aussenden von drahtlosen Steuerbefehlen zu einem Steuergerät mit verschiedenen Funktionseinheiten bekannt, wobei das Handsteuergerät mit Bedien- und Anzeigeelementen für die Funktionseinheiten zum Einleiten unterschiedlicher Betriebszustände und zum Anzeigen derselben versehen ist. Die vom Handsteuergerät ausgesandten, individuellen Steuerbefehle sind im Steuergerät aufgenommen und in einer Verarbeitungssteuerung desselben zugeordneten Funktionssteuerungen der Funktionseinheiten zuführbar. Nach der Einstellung der angesteuerten Funktionseinheiten sind ein einheitliches Quittungssignal oder unterschiedliche Quittungssignale zum Handsteuergerät zurück übertragbar. Erst nach dem Empfang der Quittungssignale im Handsteuergerät sind die zugeordneten Anzeigen einstellbar.

Der Erfindung liegt die Aufgabe zugrunde, eine Fernbedienungseinrichtung für sanitäre Anlagen anzugeben, die sich durch eine große Funktionssicherheit bezüglich der Datenübertragung sowie einen geringen Installationsaufwand auszeichnet.

Ausgehend von einer Fernbedienungseinrichtung des zuvor beschriebenen Aufbaus wird die Aufgabe erfindungsgemäß dadurch gelöst,
dass die der Steuereinrichtung einer sanitären Anlage zuordbare Empfangseinrichtung in der Basisstation integriert ist,
dass die Basisstation eine serielle Schnittstelle für einen leitungsgebundenen Datenaustausch mit der räumlich getrennten Steuerungseinrichtung aufweist,
dass der Handsender und die Basisstation paarweise durch eine in der Elektronik des Handsenders unveränderlich hinterlegte und in der Basisstation nichtflüchtig gespeicherte Kennung zugeordnet sind und
dass die Datenübertragung paketweise im Halbduplexbetrieb erfolgt.

Der als Funkfernbedienung ausgelegte Handsender dient als Eingabe- und Anzeigeeinheit für die Steuereinrichtung der sanitären Anlage. Der Handsender selbst übernimmt keinerlei Steuerungsaufgabe und besitzt auch keine Kenntnisse darüber. Insbesondere werden Tastatureingaben und Anzeigeausgaben weder durch Hardware noch durch Software innerhalb des Handsenders miteinander verknüpft. Wenn eine Tastatureingabe eine Änderung in der Anzeige zur Folge haben soll,
so muss diese Rückmeldung in der Steuereinrichtung der sanitären Anlage realisiert werden. Der Handsender arbeitet mit genau einer Basisstation zusammen und identifiziert sich gegenüber der Basisstation durch eine eindeutige Kennung, die unveränderlich in der Funkfernbedienung, z. B. im Programmspeicher (ROM), hinterlegt ist. Die Basisstation speichert nicht flüchtig, welche Funkfernbedienung ihr zugeordnet ist. Die Datenübertragung zwischen Basisstation und Handsender erfolgt im Halbduplexbetrieb, um das Erreichen der nötigen Übertragungssicherheit zu vereinfachen. Das bedeutet, dass immer nur entweder die Basisstation oder der Handsensder Funksignale senden, während der jeweils andere Sender abgeschaltet ist. Die Datenübertragung erfolgt gesichert. Dazu werden die Daten paketweise übertragen und durch eine Prüfsumme geschützt. Der korrekte Empfang eines Datenpakets wird von der Gegenstation durch ein Antwortpaket bestätigt.

Die Funkmodule arbeiten vorzugsweise im 433 MHz-Bereich.

Der Handsender weist ein wasserdichtes Gehäuse mit einem Bedienfeld und einer Flüssigkristallanzeige (LCD-Anzeige) auf und enthält eine wieder aufladbare Spannungsquelle, eine Akkuladeeinrichtung mit einer Induktionsspule für eine kontaktfreie induktive Energieaufnahme sowie ein Elektronikbauteil mit Mikroprozessor, Sender und Empfänger für den bidirektionalen Datenaustausch. Der Mikroprozessor ist als Chip (Single-Chip-Typ) mit integriertem Programmspeicher (ROM) und Variablenspeicher (RAM) ausgeführt und verfügt als Peripherie über eine serielle Schnittstelle, einen Timer und einen Quarzoszillator. Er enthält zweckmäßig ferner einen LCD-Controller zur Ansteuerung der Flüssigkristallanzeige. Alternativ ist auch ein externer LCD-Treiber einsetzbar. Da der Handsender keine nilchtflüchtigen Daten speichern muss, benötigt der Mikroprozessor keinen EEPROM-Speicherbereich. Nach einem Stromausfall durch vollständige Akkuentladung werden alle benötigten Daten von der Sende/Empfangseinrichtung in der Basisstation erneut an den Handsender übertragen.

Das Bedienfeld des Handsenders ist zweckmäßig als Folientastatur ausgebildet.

Die Basisstation ist im Umgebungsbereich der sanitären Anlage raumfest angeordnet und beispielsweise am Wannenrand einer Sanitärwanne befestigbar. Sie wird mit einer Sicherheitskleinspannung (8 bis 12 VDC und einer maximalen Stromaufnahme von 200 mA) betrieben und weist eine Leiterplatte mit den elektronischen Bauteilen sowie einen Spulenkörper für eine kontaktfreie induktive Ladestromübertragung auf die Akkuladeeinrichtung des in die Aufnahmemulde ablegbaren Handsenders auf. Die Speisung der Akkuladeeinrichtung des Handsenders erfolgt durch magnetische Kopplung jeweils einer Spule in der Basisstation und im Handsender. Die magnetische Kopplung ist nur gewährleistet, wenn der Handsender bestimmungsgemäß in der Aufnahmemulde der Basisstation abgelegt ist. Die kontaktlose Speisung überbrückt bis etwa 10 mm durch die Luft und durch die Kunststoffteile hindurch.

Die Akkuladeeinrichtung ist durch Einlegen des Handsenders in die Aufnahmemulde der Basisstation aktivierbar und meldet dies durch ein Signal an den Mikroprozessor. Das Elektronikbauteil des Handsenders ist ferner zwischen einem Aktivzustand und einem Stromsparzustand umschaltbar. Im Aktivzustand sind der Empfänger, die Flüssigkristallanzeige und eine Hintergrundbeleuchtung der Flüssigkristallanzeige eingeschaltet. Empfangene Datenpakte werden ausgewertet und die Anzeige entsprechend aktualisiert. Ferner erfolgt eine Abfrage des Bedienfeldes und Weiterleitung von Tastatureingaben über den Sender an den Empfänger der Basisstation. Im Stromsparzustand sind Sender, Empfänger und die Hintergrundbeleuchtung der Flüssigkristallanzeige ausgeschaltet. Der Mikroprozessor überwacht lediglich eine Betätigung des Bedienfeldes. Der Aktivzustand ist durch eine Betätigung des Bedienfeldes, also durch Drücken einer beliebigen Taste, oder durch Entnahme des Handsenders aus der Außenaufnahmemulde der Basisstation einschaltbar. Die Tastatureingabe, die das Verlassen des Stromsparzustands bewirkt hat, wird nicht an die Steuereinrichtung der sanitären Anlage gemeldet. Die Steuereinrichtung erhält lediglich eine Meldung über die Aktivierung des Handsenders und aktualisiert daraufhin die Anzeige. Nach einem vorgebenen Zeitintervall, z. B. von 60 Sekunden, im Anschluss an die letzte Betätigung des Bedienfeldes erfolgt eine selbsttätige Umschaltung in den Stromsparzustand.

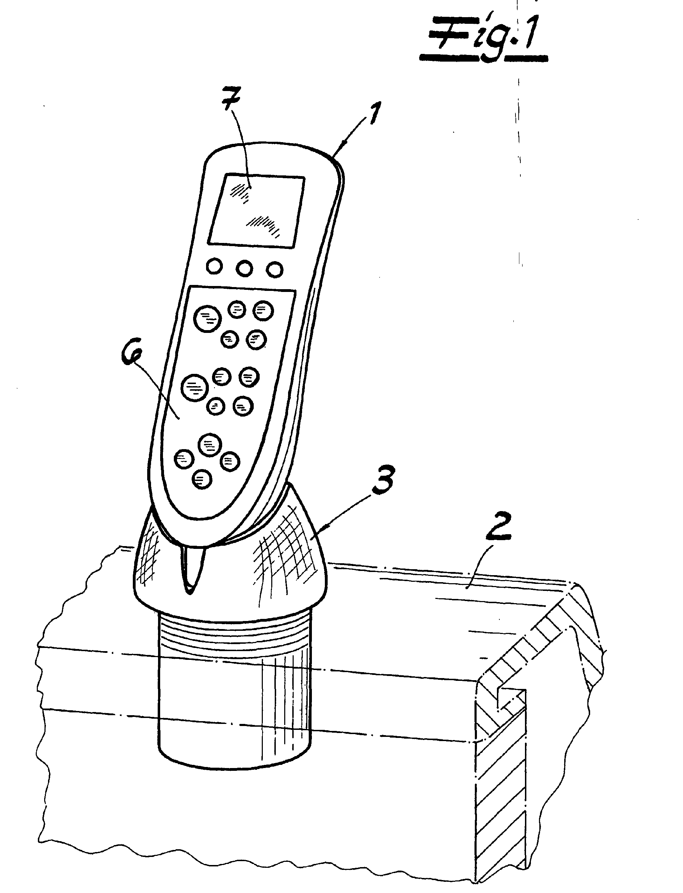

Im Folgenden wird die Erfindung anhand einer lediglich ein Ausführungsbeispiel darstellenden Zeichnung erläutert. Es zeigen schematisch
- **Fig. 1**: eine Fernbedienungseinrichtung für eine Whirlwanne,

- **Fig. 2**: ein Blockschaltbild der in Fig. 1 äargestellten Fernbedienungseinrichtung.

Die Fernbedienungseinrichtung besteht aus einem Handsender 1 und einer z. B. auf dem Wannenrand 2 der Whirlwanne befestigten Basisstation 3, die eine Aufnahmemulde für den Handsender 1 aufweist. In der Basisstation 3 ist eine Sende/Empfangseinrichtung 4, 5 integriert, die über eine mehradrige Leitung an eine nicht dargestellte Steuereinrichtung der Whirlwanne angeschlossen ist.

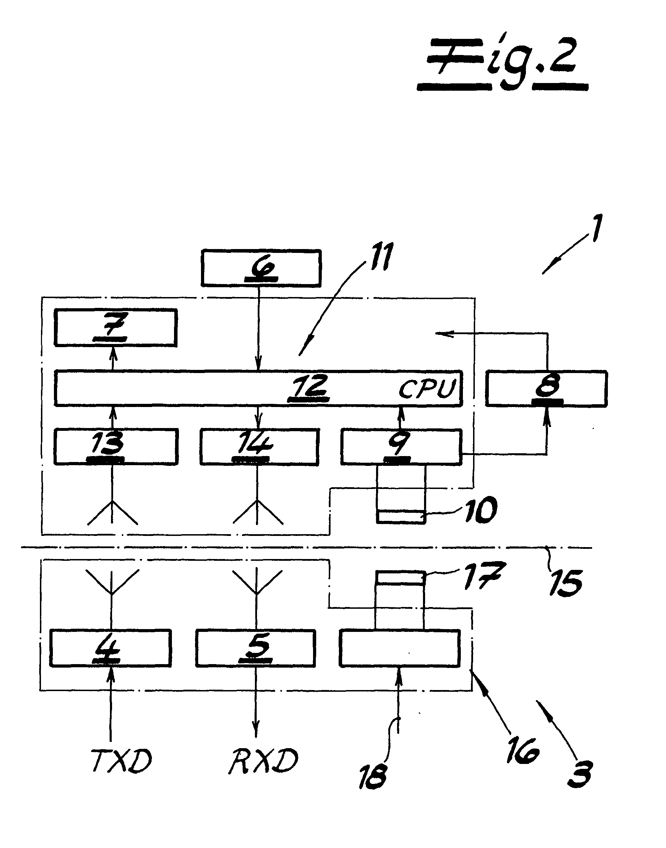

Der Handsender 1 weist ein wasserdichtes Gehäuse mit einem Bedienfeld 6 und einer Flüssigkristallanzeige 7 auf. Das Bedienfeld 6 ist als Folientastatur ausgebildet. Einer vergleichenden Betrachtung mit Fig. 2 entnimmt man, dass der Handsender 1 eine wieder aufladbare Spannungsquelle 8, eine Akkuladeeinrichtung 9 mit einer Induktionsspule 10 für eine kontaktfreie induktive Energieaufnahme sowie ein Elektronikbauteil 11 in Form einer Leiterplatte mit Mikroprozessor 12, Sender 13 und Empfänger 14 für einen bidirektionalen Datenaustausch enthält. Die Basisstation 3 ist über eine Luftschnittstelle 15 angekoppelt und weist eine Leiterplatte 16 mit Sender 4 und Empfänger 5 sowie einen Spulenkörper 17 für eine kontaktfreie, induktive Ladestromübertragung auf die Akkuladeeinrichtung 9 des in die Aufnahmemulde ablegbaren Handsenders 1 auf. Die Basisstation wird mit einer Sicherheitskleinspannung betrieben. Die durch den Richtungspfeil 18 angedeutete Stromversorgung erfolgt durch die Steuereinrichtung der Whirlwanne.

Sender 13, 4 und Empfänger 14, 5 des Handsenders 1 und der Basisstation 3 sind im Funkwellenbereich, vorzugsweise im 433 MHz-Bereich, arbeitende Funkmodule. Sie erlauben eine bidirektionale Datenübertragung. Die Basisstation 3 weist eine serielle Schnittstelle TXD, RXD für einen leitungsgebunden Datenaustausch mit der räumlich getrennten Steuerungseinrichtung der Whirlwanne auf. Der Handsender 1 dient als Eingabe- und Anzeigeeinheit für die Steuereinrichtung der Sanitärwanne. Er übernimmt keinerlei Steuerungsaufgaben und besitzt auch keine Kenntnisse darüber. Insbesondere werden Tastatureingaben und Anzeigeausgaben weder durch Hardware noch durch Software innerhalb des Handsenders miteinander verknüpft. Wenn eine Tastatureingabe eine Änderung in der Anzeige zur Folge haben soll, so muss diese Rückmeldung in der Steuereinrichtung der Whirlwanne realisiert werden.

Der Handsender 1 arbeitet genau mit einer einzigen Basisstation 3 zusammen. Die Geräte 1, 3 sind paarweise durch eine in der Elektronik des Handsenders, z. B. im Programmspeicher (ROM) des Mikroprozessors, unveränderlich hinterlegte und in der Basisstation 3 nicht flüchtig gespeicherte Kennung zugeordnet. Die Zuordnung zwischen Handsender 1 und Basisstation 3 kann werkseitig vor Auslieferung der Baugruppen vorgenommen werden.

Die Datenübertragung zwischen Basisstation 3 und Handsender 1 erfolgt im Halbduplexbetrieb, um das Erreichen der nötigen Übertragungssicherheit zu vereinfachen. Das bedeutet, dass im Sende/Empfangsbetrieb immer nur entweder die Basisstation oder der Handsender Funksignale senden, während der jeweils andere Sender abgeschaltet ist. Zur Vermeidung von Nachrichtenechos während des Sendevorganges wird zweckmäßig ferner der Empfänger desjenigen Gerätes, das Funksignale sendet, ebenfalls abgeschaltet. Die Datenübertragung erfolgt gesichert. Dazu werden die Nutzdaten paketweise übertragen und durch eine Prüfsumme geschützt. Der korrekte Empfang eines Datenpaketes wird von der Gegenstation durch ein Antwortpaket bestätigt.

Der Mikroprozessor 12 ist als Single-Chip-Typ mit integriertem Programmspeicher (ROM) und Variablenspeicher (RAM) ausgeführt und verfügt als Peripherie über eine serielle Schnittstelle, einen Timer und einen Quarzoszillator. Er enthält ferner einen LCD-Controller zur Ansteuerung der Flüssigkristallanzeige 7.

Die Speisung der Akkuladeeinrichtung 9 des Handsenders 1 erfolgt durch magnetische Kopplung jeweils einer Spule 10, 17 in der Basisstation 3 und im Handsender 1. Die magnetische Kopplung ist gewährleistet, wenn der Handsender 1 bestimmungsgemäß in der Aufnahmemulde der Basisstation 3 abgelegt ist. Die kontaktlose Speisung der Akkuladeeinrichtung 9 überbrückt etwa 10 mm durch die Luft und durch die Kunststoffteile hindurch. Die Akkuladeeinrichtung 9 ist durch Einlegen des Handsenders 1 in die Aufnahmemulde der Basisstation 3 aktivierbar und meldet dies durch ein Signal an den Mikroprozessor 12.

Das Elektronikbauteil 11 des Handsenders 1 ist zwischen einem Aktivzustand und einem Stromsparzustand umschaltbar. Im Aktivzustand sind der Empfänger 14, die Flüssigkristallanzeige 7 und eine Hintergrundbeleuchtung der Flüssigkristallanzeige eingeschaltet. Empfangene Datenpakete werden ausgewertet und die Anzeige entsprechend aktualisiert. Ferner erfolgt eine Abfrage des Bedienfeldes 6 und Weiterleitung von Tastatureingaben über den Sender 13 an die Basisstation. Im Stromsparzustand sind Sender 13, Empfänger 14 und die Hintergrundbeleuchtung der Flüssigkristallanzeige 7 ausgeschaltet. Der Mikroprozessor 12 überwacht lediglich eine Betätigung der Folientastatur. Eine beliebig gedrückte Taste oder die Entnahme des Handsenders 1 aus der Basisstation 3 bringt die Funkfernbedienung in den Aktivzustand. Die Tastatureingabe, die das Verlassen des Stromsparzustands bewirkt hat, wird nicht an die Steuereinrichtung gemeldet. Der Handsender 1 meldet der Basisstation 3 lediglich den Eintritt in den Aktivzustand. Die Steuereinrichtung der Sanitärwanne aktualisiert daraufhin die Anzeige. Nach einem vorgegebenen Zeitintervall, z. B. 60 Sekunden, im Anschluss an die letzte Betätigung der Folientastatur erfolgt eine selbsttätige Umschaltung in den Stromsparzustand.

Handsender 1 und zugeordnete Basisstation 3 bilden eine voll funktionsfähige Fernbedienungseinrichtung, deren Anwendung nicht auf Steuereinrichtungen von Whirlwannen beschränkt ist. Sie eignet sich auch zur Steuerung von elektronisch geregelten Sanitärarmaturen und sonstigen Einrichtungen von Wellness-Systemen in Feuchträumen.

## Patentansprüche

1. Fernbedienungseinrichtung für sanitäre Anlagen, insbesondere für Whirlwannen, mit
einem Handsender (1),
einer an eine Steuereinrichtung einer sanitären Anlage anschließbaren Sende/Empfangseinrichtung (4, 5) und
einer Basisstation (3) mit einer Aufnahmemulde für den Handsender (1),
wobei der Handsender (1) ein wasserdichtes Gehäuse mit einem Bedienfeld (6) und einer Flüssigkristallanzeige (7) aufweist und eine wieder aufladbare Spannungsquelle (8), eine Akkuladeeinrichtung (9) mit einer Induktionsspule (10) für eine kontaktfreie induktive Energieaufnahme sowie ein Elektronikbauteil (11) mit Mikroprozessor (12), Sender (13) und Empfänger (14) für einen bidirektionalen Datenaustausch enthält und wobei die mit einer Sicherheitskleinspannung betriebene Basisstation (3) einen Spulenkörper (17) für eine kontaktfreie, induktive Ladestromübertragung auf die Akkuladeinrichtung (9) des in die Aufnahmemulde ablegbaren Handsenders (1) aufweist, und wobei der Sender (13) und Empfänger (14) des Handsenders (1) und die an eine Steuereinrichtung anschließbare Sende/Empfangseinrichtung (4, 5) im Funkwellenbereich arbeitende Funkmodule (4, 5, 13, 14) für die bidirektionale Datenübertragung umfassen, **dadurch gekennzeichnet,**
**dass** die der Steuereinrichtung einer sanitären Anlage zuordbare Sende/Empfangseinrichtung (4, 5) in der Basisstation (3) integriert ist,
**dass** die Basisstation (3) eine serielle Schnittstelle für einen leitungsgebundenen Datenaustausch mit der räumlich getrennten Steuerungseinrichtung aufweist,
**dass** der Handsender (1) und die Basisstation (3) paarweise durch eine in der Elektronik des Handsenders (1) unveränderlich hinterlegte und in der Basisstation (3) nichtflüchtig gespeicherte Kennung zugeordnet sind und
**dass** die Datenübertragung paketweise im Halbduplexbetrieb erfolgt.

2. Fernbedienungseinrichtung nach Anspruch 1, **dadurch gekennzeichnet, dass** die Funkmodule (4, 5, 13, 14) im 433 MHz-Bereich arbeiten.

3. Fernbedienungseinrichtung nach Anspruch 1 oder 2, **dadurch gekennzeichnet, dass** der Mikroprozessor (12) als Chip mit integriertem Programmspeicher (ROM) und Variablenspeicher (RAM) ausgeführt ist und als Peripherie über eine serielle Schnittstelle, einen Timer und einen Quarzoszillator verfügt.

4. Fernbedienungseinrichtung nach einem der Ansprüche 1 bis 3, **dadurch gekennzeichnet, dass** das Bedienfeld (6) des Handsenders (1) als Folientastatur ausgebildet ist.

5. Fernbedienungseinrichtung nach einem der Ansprüche 1 bis 4, **dadurch gekennzeichnet, dass** der Empfänger desjenigen Gerätes (1 oder 3), das Funksignale sendet, zur Vermeidung von Nachrichtenechos während des Sendevorgangs abgeschaltet ist.

6. Fernbedienungseinrichtung nach einem der Ansprüche 1 bis 5, **dadurch gekennzeichnet, dass** die Akkuladeeinrichtung (9) durch Einlegen des Handsenders (1) in die Aufnahmemulde der Basisstation (3) aktivierbar ist und dies durch ein Signal an den Mikroprozessor (12) meldet.

7. Fernbedienungseinrichtung nach einem der Ansprüche 1 bis 6, **dadurch gekennzeichnet, dass** das Elektronikbauteil (11) des Handsenders (1) zwischen einem Aktivzustand und einem Stromsparzustand umschaltbar ist,
wobei im Aktivzustand der Empfänger (14), die Flüssigkristallanzeige (7) und eine Hintergrundbeleuchtung der Flüssigkristallanzeige eingeschaltet sind sowie eine Abfrage des Bedienfeldes (6) und Weiterleitung von Tastatureingaben über den Sender (13) erfolgt,
wobei im Stromsparzustand Sender (13), Empfänger (14) und die Hintergrundbeleuchtung der Flüssigkristallanzeige (7) ausgeschaltet sind und der Mikroprozessor (12) lediglich eine Betätigung des Bedienfeldes (6) überwacht und
wobei durch eine Betätigung des Bedienfeldes (6) oder durch Entnahme des Handsenders (1) aus der Aufnahmemulde der Basisstation (3) einschaltbar ist und nach einem vorgegebenen Zeitintervall im Anschluss an die letzte Betätigung des Bedienfeldes (6) eine selbsttätige Umschaltung in den Stromsparzustand erfolgt.

8. Fernbedienungseinrichtung nach einem der Ansprüche 1 bis 7, **dadurch gekennzeichnet, dass** die Basisstation (3) am Wannenrand (2) einer Sanitärwanne befestigbar oder im Umgebungsbereich einer sanitären Anlage raumfest anordbar ist.

## Claims

1. Remote operation equipment for sanitary facilities, in particular for whirlpool baths, with a hand-held transmitter (1), a transmitter/receiver unit (4. 5) that can be connected to a controller of a sanitary facility and a base station (3) with a reception socket for the hand-held transmitter (1), wherein
the hand-held transmitter (1) has a watertight housing with an operating panel (6) and a liquid crystal display (7) and contains a rechargeable power source (8), a charging circuit device (9) with an induction coil (10) for contact-free inductive intake of energy, as well as an electronics module (11) with microprocessor (12), transmitter (13) and receiver (14) for bi-directional exchange of data, and wherein
the base station (3), operated at a low safety voltage, has a coil body (17) for contact-free, inductive transfer of charge current to the charging circuit device (9) of the hand-held transmitter (1) that can be stored in the reception socket, and wherein the transmitter (13) and receiver (14) of the hand-held transmitter (1) and the transmitter/receiver unit that can be connected to the controller (4, 5) incorporate radio modules working in the radio wave range (4, 5, 13, 14) for the bi-directional transfer of data,
**characterised in that** the transmitter/receiver unit (4, 5) that can be associated with the controller of a sanitary facility is integrated in the base station (3), that the base station (3) has a serial interface for a circuit-bound exchange of data with the spatially separated controller, that the hand-held transmitter (1) and the base station (3) are associated as a pair by means of an identification deposited immutably in the electronics of the hand-held transmitter (1) and stored in a non-volatile manner in the base station (3), and that the transfer of data takes place in packets in half-duplex operation mode.

2. The remote operation equipment according to Claim 1, **characterised in that** the radio modules (4, 5, 13, 14) work in the 433 MHz range.

3. The remote operation equipment according to Claim 1 or 2, **characterised in that** the microprocessor (12) is configured as a chip with an integrated programme store (ROM) and a variables store (RAM) and has at its disposal a serial interface, a timer, and a quartz oscillator as peripheral devices.

4. The remote operation equipment according to one of the Claims 1 to 3, **characterised in that** the operating panel (6) of the hand-held transmitter (1) is configured as a membrane keyboard.

5. The remote operation equipment according to one of the Claims 1 to 4, **characterised in that** the receiver of the unit (1 or 3) that is transmitting radio signals, is switched off during the transmission process to avoid communication echoes.

6. The remote operation equipment according to one of the Claims 1 to 5, **characterised in that** the charging circuit device (9) can be activated by inserting the hand-held transmitter (1) into the reception socket of the base station (3) and communicates this to the microprocessor (12) by means of a signal.

7. The remote operation equipment according to one of the claims 1 to 6, **characterised in that** the electronic component (11) of the hand-held transmitter (1) can be switched between an active state and a power-save state, wherein in the active state the receiver (14), the liquid crystal display (7) and a background illumination of the liquid crystal display are switched on, and an interrogation of the operating panel (6) and transmission of keyboard inputs takes place via the transmitter (13), wherein in the power-save state transmitter (13), receiver (14) and the background illumination of the liquid crystal display (7) are switched off and the microprocessor (12) simply monitors actuation of the operating panel (6), and wherein by means of an actuation of the operating panel (6) or by means of removal of the hand-held transmitter (1) from the reception socket of the base station (3) it can be switched on and after a prescribed time interval subsequent to the last actuation of the operating panel (6) an independent switch-over to the power-save state takes place.

8. The remote operation equipment according to one of the Claims 1 to 7, **characterised in that** the base station (3) can be secured to the bath edge (2) of a sanitary bath, or located in a fixed position in the area in the neighbourhood of a sanitary facility.

## Revendications

1. Dispositif de télécommande pour les installations sanitaires, en particulier pour des baignoires à remous, avec un émetteur à main (1), un dispositif d'émission/réception (4, 5) pouvant être raccordé à un dispositif de commande d'une installation sanitaire et
une station de base (3) avec une cavité pour recevoir l'émetteur à main (1),
l'émetteur à main (1) présentant un boîtier étanche à l'eau avec un panneau de commande (6) et un affichage à cristaux liquides (7) et contenant une source de tension (8) rechargeable, un dispositif chargeur d'accumulateur (9) avec une bobine d'induction (10) pour une absorption d'énergie inductive sans contact ainsi qu'un composant électronique (11) avec microprocesseur (12), émetteur (13) et récepteur (14) pour un échange bidirectionnelle de données,
et la station de base (3) fonctionnant avec une faible tension pour la sécurité, présentant un corps de bobine (17) pour un transmission de courant de charge inductif sans contact vers le dispositif chargeur d'accumulateur (9) de l'émetteur à main (1) pouvant être déposé dans la cavité réceptrice, et où l'émetteur (13) et le récepteur (14) de l'émetteur à main (1) et le dispositif d'émission/réception (4, 5) pouvant être raccordé à un dispositif de commande, comprennent des modules radio (4, 5, 13, 14) fonctionnant dans le domaine des ondes radioélectriques pour la transmission bidirectionnelle de données, **caractérisé en ce que**, le dispositif d'émission/réception (4, 5) pouvant être associé au dispositif de commande d'une installation sanitaire, est intégré dans la station de base (3), la station de base (3) présente une interface sérielle pour un échange guidé de données, avec le dispositif de commande séparé spatialement, l'émetteur à main (1) et la station de base (3) sont associés par paires au moyen d'une identification enregistrée de façon invariable dans l'électronique de l'émetteur à main (1), mémorisée de façon non volatile dans la station de base (3), et la transmission de données se réalise par paquets selon un fonctionnement semi-duplex.

2. Dispositif de télécommande selon la revendication 1, **caractérisé en ce que** les modules radio (4, 5, 13, 14) fonctionnent dans la bande des 433 MHz.

3. Dispositif de télécommande selon la revendication 1 ou 2, **caractérisé en ce que** le microprocesseur (12) est réalisé sous forme de puce avec une mémoire de programme intégrée (mémoire ROM) et une mémoire variable (mémoire RAM) intégrée, et dispose en tant que périphériques, d'une interface sérielle, d'un temporisateur et d'un oscillateur à quartz.

4. Dispositif de télécommande selon l'une quelconque des revendications 1 à 3, **caractérisé en ce que** le panneau de commande (6) de l'émetteur à main (1) est conçu sous la forme de clavier à effleurement.

5. Dispositif de télécommande selon l'une quelconque des revendications 1 à 4, **caractérisé en ce que** le récepteur de cet appareil (1 ou 3) qui émet des signaux radio, est mis hors circuit pendant le processus d'émission pour éviter des échos de messages.

6. Dispositif de télécommande selon l'une quelconque des revendications 1 à 5, **caractérisé en ce que** le dispositif chargeur d'accumulateur (9) peut être activé en déposant l'émetteur à main (1) dans la cavité réceptrice de la station de base (3), et qu'il le signale au microprocesseur (12) par un signal.

7. Dispositif de télécommande selon l'une quelconque des revendications 1 à 6, **caractérisé en ce que** le composant électronique (11) de l'émetteur à main (1) peut être commuté entre un état actif et un état économisant le courant, dans l'état actif du récepteur (14), l'affichage à cristaux liquides (7) et un rétro-éclairage de l'affichage à cristaux liquides étant enclenchés, et une interrogation du panneau de commande (6) et un acheminement des introductions par clavier se réalisent par l'intermédiaire de l'émetteur (13), dans l'état économisant le courant, l'émetteur (13), le récepteur (14) et le rétro-éclairage de l'affichage à cristaux liquides (7), sont mis hors service et uniquement le microprocesseur (12) surveille un actionnement du panneau de commande (6), et où en actionnant le panneau de commande (6) ou en retirant l'émetteur à main (1) de la cavité réceptrice de la station de base (3), il peut être déclenché, et après un intervalle de temps prédéterminé faisant suite au dernier actionnement du panneau de commande (6), il se produit une commutation automatique vers l'état économisant le courant.

8. Dispositif de télécommande selon l'une quelconque des revendications 1 à 7, **caractérisé en ce que** la station de base (3) peut être fixée sur le bord de baignoire (2) d'une baignoire sanitaire ou disposé de façon stable dans la zone entourant une installation sanitaire.
